# FASCICULE DE BREVET EUROPEEN

(11) **EP 3 298 089 B1**
(45) Date de publication et mention de la délivrance du brevet: **20.10.2021**
(21) Numéro de dépôt: 16726816.8
(22) Date de dépôt: 19.05.2016
(51) Int. Cl.: C09D 11/03, B22F 1/00, B22F 9/24, C09D 11/033, C09D 11/037, H05K 3/12, B41M 1/12, B41M 1/22, C09D 11/52, C09K 13/00

(54) **ENCRE A BASE DE NANOPARTICULES D'ARGENT**
TINTE MIT SILBERNANOPARTIKELN
INK BASED ON SILVER NANOPARTICLES

(30) Priorité: 20.05.2015 FR 1501042; 01.10.2015 FR 1502042
(43) Date de publication de la demande: 28.03.2018
(73) Titulaire: Genes'Ink SA, 13790 Rousset (FR)
(72) Inventeur: DELPONT, Nicolas, 13540 Puyricard (FR); VERSINI, Corinne, 13100 Aix en Provence (FR); EL QACEMI, Virginie, 13360 Roquevaire (FR); STAELENS, Gregoire, 13090 Aix en Provence (FR); KAUFFMAN, Louis-Dominique, 83260 La Crau (FR)
(74) Mandataire: De Kezel, Eric
(86) Numéro de dépôt international: PCT/EP2016/061318
(87) Numéro de publication internationale: WO 2016/184979

(56) Documents cités:
- EP-A1- 1 339 073
- EP-A1- 1 571 186
- EP-A1- 2 236 565
- EP-A2- 2 763 141
- WO-A2-2010/101418

## Description

La présente invention a pour objet des formulations d'encre à base de nanoparticules d'argent. En particulier, la présente invention concerne des formulations d'encre à base de nanoparticules d'argent, les dites encres étant stables et à conductivité améliorée.

Des encres similaires ont déjà été décrites par la Demanderesse dans sa demande de brevet PCT/EP2014/075415 déposée le 24 novembre 2014.

Plus particulièrement, la présente invention concerne des formulations d'encre à base de nanoparticules d'argent, les dites encres étant caractérisées par un ensemble de propriétés améliorées parmi lesquelles nous citerons à titre illustratif :
- Un meilleur recuit (homogénéité du dépôt), et/ou
- Une absence de génération de bulles/mousses lors de l'impression, et/ou
- Un meilleur temps de résidence (par exemple, pas de séchage de l'encre sur le masque), et/ou
- Une excellente conductivité après séchage à température ambiante.

Plus particulièrement, la présente invention se rapporte au domaine des encres à base de nanoparticules conductrices adaptées pour la sérigraphie, le blade coating, la tampographie et/ou la gravure (offset).

Les encres à base de nanoparticules conductrices selon la présente invention peuvent être imprimées sur tous types de supports. On citera à titre d'exemple les supports suivants : polymères et dérivés de polymères, matériaux composites, matériaux organiques, matériaux inorganiques.

Les encres à base de nanoparticules conductrices selon la présente invention présentent de nombreux avantages parmi lesquels nous citerons à titre d'exemples non limitatifs :
- une stabilité dans le temps supérieure aux encres actuelles ;
- une non-toxicité des solvants et des nanoparticules ;
- une conservation des propriétés intrinsèques des nanoparticules ; et, en particulier,
- une conductivité améliorée pour des températures de recuit généralement comprises entre 150°C et 300°C ; et/ou
- une excellente conductivité après séchage à température ambiante.

La présente invention se rapporte également à une méthode de préparation améliorée des dites encres ; enfin, la présente invention se rapporte aussi à l'utilisation des dites encres dans le domaine de la sérigraphie, le blade coating, la tampographie et/ou de la gravure (offset).

A la vue de la littérature de ces dernières années, les nanocristaux colloïdaux conducteurs ont reçu beaucoup d'attention grâce à leurs nouvelles propriétés optoélectroniques, photovoltaïques et catalytiques. Cela les rend particulièrement intéressants pour de futures applications dans le domaine de la nanoélectronique, des cellules solaires, des capteurs et du biomédical.

Le développement de nanoparticules conductrices permet de recourir à de nouvelles mises en œuvre et d'entrevoir une multitude de nouvelles applications. Les nanoparticules possèdent un rapport surface / volume très important et la substitution de leur surface par des tensioactifs entraîne le changement de certaines propriétés, notamment optiques, et la possibilité de les disperser.

Leurs faibles dimensions peuvent amener dans certains cas des effets de confinement quantique. Le terme de nanoparticules est employé lorsqu'au moins une des dimensions de la particule est inférieure ou égale à 250 nm. Les nanoparticules peuvent être des billes (de 1 à 250 nm), des bâtonnets (L < 200 à 300 nm), des fils (quelques centaines de nanomètres voire quelques microns), des disques, des étoiles, des pyramides, des tétrapodes, des cubes ou des cristaux lorsqu'ils n'ont pas de forme prédéfinie.

Plusieurs procédés ont été élaborés afin de synthétiser des nanoparticules conductrices. Parmi eux, on peut citer de façon non exhaustive :
- les procédés physiques :
   ▪ la déposition de vapeur chimique (aussi connue sous la dénomination « Chemical Vapor Deposition - CVD ») lorsqu'un substrat est exposé à des précurseurs chimiques volatilisés qui réagissent ou se décomposent sur sa surface. Ce procédé conduit généralement à la formation de nanoparticules dont la morphologie dépend des conditions utilisées ;
   ▪ l'évaporation thermique ;
   ▪ l'épitaxie par jets moléculaires (aussi connue sous la dénomination « Molecular Beam Epitaxy ») lorsque des atomes qui vont constituer les nanoparticules sont bombardés à grande vitesse sur le substrat (où ils vont se fixer), sous la forme d'un flux gazeux ;
- les procédés chimiques ou physico-chimiques :
   ▪ la microémulsion ;
   ▪ l'impulsion laser en solution, lorsqu'une solution contenant un précurseur est irradiée par faisceau laser. Les nanoparticules se forment dans la solution le long du faisceau lumineux ;
   ▪ La synthèse par irradiation aux microondes ;
   ▪ La synthèse orientée assistée par des surfactants ;
   ▪ La synthèse sous ultrasons ;
   ▪ La synthèse électrochimique ;
   ▪ La synthèse organométallique ;
   ▪ La synthèse en milieu alcoolique.

Les synthèses physiques consomment plus de matières premières avec des pertes significatives. Elles nécessitent généralement du temps et des températures élevées ce qui les rendent peu attractives pour le passage à une production à l'échelle industrielle. Cela les rend non adaptées à certains substrats, par exemple les substrats souples. De plus, les synthèses s'effectuent directement sur les substrats dans des bâtis aux dimensions réduites. Ces modes de productions se révèlent relativement rigides et ne permettent pas de produire sur des substrats de grandes dimensions ; ils peuvent toutefois parfaitement convenir pour la production des nanoparticules d'argent utilisées dans les formulations d'encre selon la présente invention.

Les synthèses chimiques quant à elles possèdent de nombreux avantages. Le premier est de travailler en solution, les nanoparticules conductrices obtenues ainsi sont déjà dispersées dans un solvant ce qui en facilite le stockage et l'utilisation. Dans la plupart des cas, les nanoparticules ne sont pas fixées à un substrat en fin de synthèse ce qui amène plus de latitude dans leur utilisation. Cela ouvre la voie à l'emploi de substrats de différentes taille et de différentes natures. Ces méthodes permettent aussi un meilleur contrôle des matières premières mises en jeu et limitent des pertes. Un bon ajustement des paramètres de synthèse conduit à un bon contrôle de la synthèse et la cinétique de croissance des nanoparticules conductrices. Ceci permet de garantir une bonne reproductibilité entre les lots ainsi qu'un bon contrôle de la morphologie finale des nanoparticules. La capacité à produire rapidement et en grand quantité des nanoparticules par voie chimique tout en garantissant une certainement flexibilité au produit permet d'envisager une production à l'échelle industrielle. L'obtention des nanoparticules conductrices dispersées ouvre de nombreuses perspectives concernant leur customisation. Il est ainsi possible d'ajuster la nature des stabilisants présents à la surface des nanoparticules selon l'application visée. En effet, il existe différentes méthodes de dépôt en voie humide. Dans chaque cas, une attention particulière doit être portée aux propriétés physiques de l'encre telle que la tension de surface ou la viscosité. Les adjuvants employés lors de la formulation de l'encre à base de nanoparticules vont permettre de coller aux exigences de la méthode de dépôt. Mais les ligands de surface vont également impacter ces paramètres et leur choix s'avèrent décisif. Il est donc important d'avoir une vue d'ensemble de l'encre pour combiner tous les acteurs - nanoparticules, solvant, ligands et adjuvants- et obtenir un produit compatible avec les applications visées.

La présente invention a pour objectif de palier à un ou plusieurs inconvénients de l'art antérieur en fournissant une encre adaptée à la sérigraphie et/ou à la gravure (offset) et comprenant de préférence une dispersion de nanoparticules d'argent stable et à forte concentration. Les dites encres sont caractérisées par un ensemble de propriétés améliorées parmi lesquelles nous citerons à titre illustratif :
- Un meilleur recuit (homogénéité du dépôt), et/ou
- Une absence de génération de bulles/mousses lors de l'impression, et/ou
- Un meilleur temps de résidence (par exemple, pas de séchage de l'encre sur le masque), et/ou
- Une excellente conductivité après séchage à température ambiante.

La présente invention concerne donc une encre dont la composition comprend au moins
1. un composé « a » consistant en des nanoparticules d'argent,
2. un composé « e » consistant en un mélange de solvants, et
3. au moins un composé « f » et/ou « g » sélectionnés parmi
   a. un composé « f » consistant en un agent modificateur de rhéologie de type urée, et
   b. un composé « g » consistant en un agent modificateur de rhéologie de type cellulosique,
4. un composé « c » optionnel consistant en un agent dispersant,
5. un composé « d » optionnel consistant en un agent dispersant différent du composé « c »,
6. un composé « b » optionnel consistant en un solvant cyclooctane et/ou un solvant de type ester méthylique d'acides gras, et/ou un mélange de deux ou plusieurs des dits solvants,
7. un composé « h » optionnel consistant en un agent antioxydant dans une teneur inférieure à 10% en poids, et
8. un solvant « X » optionnel additionnel de préférence sélectionné parmi les alcanes et/ou leurs mélanges,
   caractérisée en ce que
   A. le composé « a » constitue au moins 40 % en poids de la composition d'encre,
   B. le composé « e » consiste en au moins un alcool terpénique qui constitue au moins 20% en poids de la composition d'encre et au moins un polyol (et/ou un dérivé de polyol) qui constitue au moins 5% en poids et au plus 25% en poids de la composition d'encre, et
   C. la somme des composés « a », « b », « c », « d », « e », « f », « g », « h » et « X » constitue au moins 85% en poids de la composition d'encre.

La viscosité de l'encre selon la présente invention est généralement comprise entre 10 et 10 000 mPa.s, de préférence comprise entre 100 et 5 000 mPa.s, par exemple entre 200 et 2 500 mPa.s, par exemple entre 400 et 2 000 mPa.s.

La Demanderesse a découvert que la composition d'encre à base de nanoparticules d'argent selon la présente invention avec la combinaison des composés revendiqués et de leur concentration respective permettait l'obtention d'une encre aux propriétés améliorées, en particulier une stabilité améliorée ainsi qu'une conductivité améliorée dans une gamme de viscosités particulièrement adaptées pour des utilisations dans les domaines de la sérigraphie, le blade coating, la tampographie et/ou à la gravure (offset) ; en particulier, les formulations d'encre à base de nanoparticules d'argent selon la présente invention présentent un ensemble de propriétés améliorées parmi lesquelles nous citerons à titre illustratif :
- Un meilleur recuit (homogénéité du dépôt), et/ou
- Une absence de génération de bulles/mousses lors de l'impression, et/ou
- Un meilleur temps de résidence (par exemple, pas de séchage de l'encre sur le masque), et/ou
- Une excellente conductivité après séchage à température ambiante.

Les encres à base de nanoparticules conductrices selon la présente invention peuvent être imprimées sur tous types de supports. On citera à titre d'exemple les supports suivants : polymères et dérivés de polymères, matériaux composites, matériaux organiques, matériaux inorganiques. Le fait que l'encre selon la présente invention puisse être utilisée à température ambiante permet également d'élargir son champ d'utilisation en matière de support utilisable. Nous citerons à titre illustratif
- l'impression sur matière plastique (Tg < 60°C), par exemple le PVC (par exemple, les films alimentaires), et/ou
   le Polystyrène,
- l'impression sur papier couché ou non,
- l'impression sur substrat biologique (par exemple des tissus organiques, et/ou végétaux),
- la réalisation de biocapteurs, et/ou
- l'impression sur des pièces encombrantes (par exemple des murs, des pièces plastiques de taille importante, etc.)

Le composé « a » selon la présente invention consiste donc en des nanoparticules d'argent.

Selon une variante de réalisation de la présente invention, les objectifs de la présente invention sont particulièrement bien atteints lorsque le composé « a » est constitué de nanoparticules d'argent dont les dimensions sont comprises entre 1 et 250 nm. La taille des nanoparticules est définie comme étant le diamètre moyen des particules contenant de l'argent, à l'exclusion des stabilisants, tel que déterminé par exemple par microscopie électronique par transmission.

Selon une variante de réalisation de la présente invention, les nanoparticules d'argent sont de forme sphéroïdale et/ou sphérique. Pour la présente invention et les revendications qui suivent, le terme « de forme sphéroïdale » signifie que la forme ressemble à celle d'une sphère mais elle n'est pas parfaitement ronde (« quasisphérique »), par exemple une forme ellipsoïdale. La forme des nanoparticules est généralement identifiée au moyen de photographies prises par microscope. Ainsi, selon cette variante de réalisation de la présente invention, les nanoparticules ont des diamètres compris entre 1 et 250 nm.

Selon une variante de réalisation de la présente invention, les nanoparticules d'argent sont de forme de billes (de 1 à 250 nm), de bâtonnets (L < 200 à 300 nm), de fils (quelques centaines de nanomètres voire quelques microns), des cubes, de plaquettes ou des cristaux lorsqu'ils n'ont pas de forme prédéfinie.

Selon un mode d'exécution particulier de la présente invention, les nanoparticules d'argent ont été préalablement synthétisées par synthèse physique ou synthèse chimique. Toute synthèse physique ou chimique peut être utilisée dans le cadre de la présente invention. Dans un mode d'exécution particulier selon la présente invention les nanoparticules d'argent sont obtenues par une synthèse chimique qui utilise comme précurseur d'argent un sel d'argent organique ou inorganique. A titre d'exemple non limitatif, on citera l'acétate d'argent, le nitrate d'argent, le carbonate d'argent, le phosphate d'argent, le trifluorate d'argent, le chlorure d'argent, le perchlorate d'argent, seuls ou en mélange. Selon une variante de la présente invention, le précurseur est de l'acétate d'argent.

Selon un mode d'exécution particulier de la présente invention, les nanoparticules d'argent sont synthétisées par synthèse chimique, par réduction du précurseur d'argent au moyen d'un agent réducteur en présence d'un agent dispersant, dénommé ci-après le composé « c » ; cette réduction peut s'effectuer en absence ou en présence d'un solvant (dénommé aussi par la suite le « solvant de synthèse »). Lorsque la synthèse est effectuée en absence de solvant, l'agent dispersant agit généralement à la fois en tant qu'agent dispersant et en tant que solvant du précurseur d'argent; un exemple particulier de synthèse de nanoparticules en milieu sans solvant et de préparation de la dispersion selon la présente invention est décrit à titre illustratif ci-après.

Exemple de préparation de la dispersion des nanoparticules dans le solvant « b » : dans un réacteur contenant de l'acétate d'argent, l'agent dispersant de synthèse (composé « c » ; par exemple la dodécylamine) est ajouté en excès et le mélange est agité. L'agent réducteur hydrazine est ensuite ajouté rapidement au mélange et l'ensemble est laissé sous agitation environ 60 minutes. Le mélange est traité par l'ajout de méthanol (ou de tout autre solvant approprié, par exemple un autre alcool monohydrique ayant de 2 à 3 atomes de carbone, par exemple de l'éthanol) et le surnageant est éliminé au cours de plusieurs lavages successifs (les nanoparticules d'argent ainsi formées restent donc à l'état de dispersion et au contact de liquide). Le solvant cyclooctane (composé « b ») est ajouté et le méthanol résiduel est évaporé. Le composé « d » (un agent dispersant différent du composé « c » utilisé ; par exemple une octylamine) est ensuite ajouté et le mélange est agité pendant 15 minutes à température ambiante. Les dispersions de nanoparticules d'argent ainsi obtenues sont utilisées directement pour la formulation des encres conductrices.

Le solvant de synthèse est par exemple un solvant organique choisi parmi la liste suivante d'hydrocarbures:
- les alcanes ayant de 5 à 20 atomes de carbone dont on citera à titre illustratif les Pentane (C5H12), Hexane (C6H14), Heptane (C7H16), Octane (C8H18), Nonane (C9H20), Décane (C10H22), Undécane (C11H24), Dodécane (C12H26), Tridécane (C13H28), Tétradécane (C14H30), Pentadécane (C15H32), Cétane (C16H34), Heptadécane (C17H36), Octadécane (C18H38), Nonadécane (C19H40), Eicosane (C20H42), cyclopentane (C5H10), cyclohexane (C6H12), méthylcyclohexane (C7H14), cycloheptane (C7H14), cyclooctane (C8H16) (de préférence lorsqu'il n'est pas utilisé comme composé « b »), cyclononane (C9H18), cyclodécane (C10H20) ;
- les hydrocarbures aromatiques ayant de 7 à 18 atomes de carbone dont on citera à titre illustratif les toluène, xylène, éthylbenzène, éthyltoluène ;
- et leurs mélanges.

Selon un mode d'exécution de la présente invention, au moins un agent dispersant (le composé « c ») est également présent en addition du précurseur d'argent - et du solvant de synthèse (lorsque ce dernier est utilisé). Cet agent dispersant, que nous appellerons agent dispersant de synthèse correspond donc au composé « c » défini ci-dessous et est de préférence choisi parmi la liste des agents dispersants décrits ci-après dans la présente description.

Selon un mode d'exécution de la présente invention, les nanoparticules d'argent sont donc synthétisées par synthèse chimique, par réduction du précurseur d'argent au moyen d'un agent réducteur en présence de l'agent dispersant de synthèse (le composé « c »), le tout s'effectuant de préférence dans le solvant de synthèse. Cette synthèse s'effectue de préférence dans des conditions de pression et de température non contraignantes telles que définies ci-après dans la présente description.

L'agent réducteur pourra être sélectionné parmi une large gamme de composés permettant la réduction du précurseur d'argent. On citera à titre illustratif les composés suivants : l'hydrogène ; les hydrures, parmi lesquels nous citerons à titre d'exemple les NaBH4, LiBH4, KBH4, et le borohydure de tétrabutylammonium ; les hydrazines, parmi lesquels nous citerons à titre d'exemple les hydrazine (H2N-NH2), hydrazine substituée (méthylhydrazine, phénylhydrazine, dimétylhydrazine, diphénylhydrazine, paraméthoxyphénylhydrazine, etc...), sel d'hydrazine (substituée), etc... ; les amines, parmi lesquels nous citerons à titre d'exemple les triméthylamine, triéthylamine, etc... ; et leurs mélanges.

En général, après l'étape de réduction, les nanoparticules sont ensuite soumises à une étape de lavage/purification qui permet d'éliminer tout ce qui n'est pas chimiquement ou physiquement lié aux nanoparticules.

Selon un mode d'exécution particulier de la présente invention, une phase liquide est toujours présente, à la fois lors de l'étape de réduction du précurseur d'argent ainsi que lors de toutes les étapes (par exemple les étapes de lavage et purification susmentionnées) qui précèdent l'ajout du composé « b ». En d'autres termes, une caractéristique préférée selon la présente invention consiste en ce que les nanoparticules d'argent ne soient jamais isolées et séchées ; elles restent donc dans ce mode d'exécution particulier toujours en contact avec une phase liquide (par exemple un solvant) dans laquelle elles sont dispersées. Comme démontré plus avant dans la description, cette caractéristique permet d'améliorer considérablement certaines propriétés (monodispersion, homogénéité, stabilité et recuit à plus basse température) des nanoparticules d'argent. Cette approche permet de supprimer l'étape d'isolation des nanoparticules ce qui a un impact positif en termes de coûts de production et d'hygiène et sécurité des personnes.

Selon une variante de réalisation de la présente invention, avant son utilisation dans la formulation de l'encre, le composé « a » est avantageusement dispersé dans un solvant de dispersion (composé « b » défini ci-dessous). Lorsque le solvant de dispersion est utilisé, le solvant de synthèse des nanoparticules cité ci-dessus est généralement différent du dit solvant de dispersion. Le composé « b » selon la présente invention consiste par exemple en un solvant cyclooctane et/ou un solvant de type ester méthylique d'acides gras, et/ou un mélange de deux ou plusieurs des dits solvants.

Le solvant de type ester méthylique d'acides gras est de préférence à chaine hydrocarbonée courte ; par exemple une chaine comprenant entre 4 et 8 atomes de carbone. On citera à titre d'exemples les butanoate de méthyle, hexanoate de méthyle,
et/ou octanoate de méthyle.

Selon une variante de réalisation de la présente invention, un deuxième agent dispersant (appelé composé « d » ci-après) est également utilisé en complément des nanoparticules d'argent avant formulation de l'encre; l'addition du deuxième agent dispersant (composé « d ») a généralement lieu après la synthèse des nanoparticules, par exemple lors de l'étape de dispersion mentionnée ci-dessus. Les composés « c » (agent dispersant de synthèse) et « d » (agent dispersant de dispersion) selon la présente invention consistent donc en des agents dispersants caractérisés en ce que l'agent dispersant « d » est différent de l'agent « c » utilisé. Cette différence s'affiche par une chimie différente ; nous citerons à titre illustratif une longueur de chaine carbonée différente (par exemple une différence d'au moins deux atomes de carbone dans la chaine), et/ou un composé à chaine carbonée linéaire et l'autre pas, et/ou un composé à chaine carbonée cyclique et l'autre pas et/ou un composé à chaine carbonée aromatique et l'autre pas. Selon un mode d'exécution préféré de la présente invention, le composé « c » possède une masse moléculaire et/ou une longueur de chaine carbonée au moins 20% supérieure à celle du composé « d », par exemple au moins 40% supérieure.

Ces agents dispersants peuvent avantageusement être sélectionnés parmi les familles des agents dispersants organiques qui comprennent au moins un atome de carbone. Ces agents dispersants organiques peuvent aussi comprendre un ou plusieurs hétéroatomes non métalliques tels qu'un composé halogéné, l'azote, l'oxygène, le soufre, le silicium.

On citera à titre illustratif les thiols et leurs dérivés, les amines et leurs dérivés (par exemple les amino alcools et les éthers d'amino alcools), les acides carboxyliques et leurs dérivés carboxylates, les polyéthylène glycols, et/ou leurs mélanges.

Dans une variante de réalisation de la présente invention, les agents dispersants organiques « c » et « d » seront sélectionnés dans le groupe constitué par les amines telles que par exemple la propylamine, la butylamine, la pentylamine, l'hexylamine, l'heptylamine, l'octylamine, la nonylamine, la décylamine, l'undécylamine, la dodécylamine, la tridécylamine, la tetradécylamine, l'hexadécylamine, le diaminopentane, le diaminohexane, le diaminoheptane, le diaminooctane, le diaminononane, le diaminodécane , la dipropylamine, la dibutylamine, la dipentylamine, la dihexylamine, la diheptylamine, la dioctylamine, la dinonylamine, la didécylamine, la méthylpropylamine, l'éthylpropylamine, la propylbutylamine, l'éthylbutylamine, l'éthylpentylamine, la propylpentylamine, la butylpentylamine, la tributylamine, la trihexylamine, ou leurs mélanges.

Selon un mode d'exécution particulier de la présente invention, les composés « b » et « d » sont rajoutés aux nanoparticules d'argent déjà synthétisées en présence du composé « c ».

Ce rajout se passe généralement après les étapes de lavage/purification des nanoparticules comme décrit dans la présente description.

Un exemple particulier de synthèse de nanoparticules et de préparation de la dispersion correspondante selon un mode d'exécution particulier de la présente invention est décrit à titre illustratif ci-après :
Préparation de la dispersion des nanoparticules dans le solvant « b » :
Dans un réacteur contenant de l'acétate d'argent dans le toluène (le solvant de synthèse), l'agent dispersant de synthèse (composé « c » ; par exemple la dodécylamine) est ajoutée et le mélange est agité. L'agent réducteur hydrazine est ensuite ajouté rapidement au mélange et l'ensemble est laissé sous agitation environ 60 minutes. Le mélange est traité par l'ajout de méthanol (ou de tout autre solvant approprié, par exemple un autre alcool monohydrique ayant de 2 à 3 atomes de carbone, par exemple de l'éthanol) et le surnageant est éliminé au cours de trois lavages successifs (les nanoparticules d'argent ainsi formées restent donc à l'état de dispersion et au contact de liquide, en l'occurrence au contact de méthanol). Le solvant cyclooctane (composé « b ») est ajouté et le méthanol résiduel est évaporé. Le composé « d » (un agent dispersant différent du composé « b » utilisé - par exemple une octylamine) est ensuite ajouté et le mélange est agité pendant 15 minutes à température ambiante. Les nanoparticules d'argent ainsi obtenues en dispersion sont utilisées directement pour la formulation des encres conductrices.

Ainsi, les nanoparticules qui sont utilisées selon la présente invention sont caractérisées par des valeurs de D50 qui sont préférentiellement comprises entre 1 et 250 nm quel que soit leur mode de synthèse (physique ou chimique); elles sont également de préférence caractérisées par une distribution monodisperse (homogène) sans agrégat. Des valeurs de D50 comprises entre 4 et 15 nm pour des nanoparticules d'argent sphéroïdales peuvent également être avantageusement utilisées.

La dispersion ainsi obtenue pourra être utilisée directement ou bien diluée afin d'obtenir les propriétés souhaitées avant d'être incorporée dans l'encre. Toutefois, et ceci représente un avantage considérable des dispersions selon la présente invention, les dites dispersions sont caractérisées par une stabilité supérieure (avant dilution).

Selon une variante de réalisation de la présente invention, les encres comprennent en plus du composé nanoparticules d'argent « a », au moins un composé agent dispersant « c » et au moins un composé agent dispersant « d » différent du composé « c », ainsi qu'un composé solvant de dispersion optionnel « b ».

Le composé « e » présent dans l'encre selon la présente invention consiste donc en un mélange de solvants qui consiste en au moins un alcool terpénique et au moins un polyol (et/ou un dérivé de polyol) ; plus particulièrement, le composé « e » consiste en au moins un alcool terpénique qui constitue au moins 15%, par exemple au moins 20% en poids de la composition d'encre et au moins un polyol (et/ou un dérivé de polyol) qui constitue au moins 5% en poids et au plus 30% en poids, par exemple au plus 25% en poids de la composition d'encre.

L'alcool terpénique est de préférence sélectionné parmi les menthol, nérol, cineol, lavandulol, myrcénol, terpinéol (alpha-, beta-, gamma-terpinéol, et/ou terpinén-4-ol ; de préférence, l'alpha-terpinéol), isobornéol, citronellol, linalol, borneol, géraniol, et/ou un mélange de deux ou plusieurs des dits alcools.

Le polyol (et/ou un dérivé de polyol) est de préférence caractérisé par un point d'ébullition inférieur à 260°C. On citera à titre d'exemples les glycols (par exemple les ethylène glycol, propylène glycol, diethylène glycol, triméthylène glycol, 1,3-Butylène glycol, 1,2-Butylène glycol, 2,3-Butylène glycol, Pentaméthylene glycol, hexylène glycol,.....), et/ou les éthers de glycols (par exemple les mono- ou di-éthers de glycols parmi lesquels nous citerons à titre d'exemple les éthylène glycol propyl éther, éthylène glycol butyle éther, éthylène glycol phényl éther, propylène glycol phényl éther di éthylène glycol méthyl éther, di éthylène glycol éthyle éther, di éthylène glycol propyl éther, di éthylène glycol butyle éther, propylène glycol méthyle éther, propylène glycol butyle éther, propylène glycol propyl éther, éthylène glycol di-méthyl éther, éthylène glycol di-éthyle éther, éthylène glycol di-butyle éther, glymes, éther di éthylique de di éthylène-glycol, éther di éthylique de di butylène-glycol, diglymes, éthyle diglyme, butyle diglyme), et/ou les acétates d'éther de glycols (par exemple, les acétate de 2-Butoxyéthyle, di éthylène glycol monoethyl éther acétate, di éthylène glycol butylether acétate, propylène glycol méthyle éther acétate), et/ou un mélange de deux ou plusieurs des dits solvants précités.

Selon un mode d'exécution préféré de la présente invention, le mélange de solvants (composé « e ») est caractérisé par un rapport pondéral entre l'alcool terpénique et le polyol (et/ou le dérivé de polyol) qui est compris entre 1,1 et 10, par exemple entre 1,1 et 6 ; ce rapport pondéral peut aussi être compris entre 2 et 8, par exemple entre 3 et 6.

Le composé « f » selon la présente invention consiste donc en un agent modificateur de rhéologie sélectionné parmi les agents modificateurs de rhéologie de type urée. Il est de préférence sélectionné parmi les urées modifiées, de préférence les polyurées, et/ou leurs mélanges.

Le composé « g » selon la présente invention consiste donc en un agent modificateur de rhéologie sélectionné parmi les agents modificateur de rhéologie de type cellulosique. On citera à titre d'exemple les alkyle-cellulose, de préférence l'éthylcellulose, les nitrocelluloses et/ou leurs mélanges.

Le composé « h » optionnel selon la présente invention consiste donc en un agent antioxydant. On citera à titre d'exemple les
- acide ascorbique ou vitamine C (E300), ascorbates de sodium (E301), de calcium (E302), acide diacétyl 5-6-1-ascorbique (E303), acide palmityl 6-1-ascorbique (E304) ;
- acide citrique (E330), citrates de sodium (E331), de potassium (E332) et de calcium (E333) ;
- acide tartrique (E334), tartrates de sodium (E335), potassium (E336) et de sodium et de potassium (E337) ;
- butylhydroxyanisol (E320) et butylhydroxytoluol (E321) ;
- gallates d'octyle (E311) ou de dodécyle (E312) ;
- lactates de sodium (E325), de potassium (E326) ou de calcium (E327) ;
- lécithines (E322) ;
- tocophérols naturels (E306), α-tocophérol de synthèse (E307), γ-tocophérol de synthèse (E308) et δ-tocophérol de synthèse (E309), l'ensemble des tocophérols constituant la vitamine E ;
- eugénol, thymol et/ou cinnamaldéhyde,
- ainsi qu'un mélange de deux ou plusieurs des dits antioxydants.

Selon un mode d'exécution particulier de la présente invention, les compositions d'encres peuvent également comprendre un solvant additionnel, que nous appellerons solvant « X » et qui pourra être avantageusement sélectionné parmi un ou plusieurs des solvants de synthèse des nanoparticules et/ou des solvants « b » de dispersion précités et/ou un mélange de deux ou plusieurs des dits solvants. Selon une variante de réalisation de la présente invention, le dit solvant « X » comprendra (ou sera avantageusement sélectionné parmi) des alcanes et/ou leurs mélanges. Selon une variante de réalisation de la présente invention, le dit solvant « X » comprendra un ou plusieurs alcools monohydriques, de préférence sélectionnés parmi les alcools à radical aliphatique linéaire ou ramifié, par exemple un alcool ayant de 1 à 10 atomes de carbone. On citera à titre illustratif le méthanol, l'éthanol, le butanol, l'heptanol, le diméthyle heptanol, et/ou un mélange de deux ou plusieurs des dits alcools.

Un exemple particulier de préparation de l'encre selon la présente invention est décrit à titre illustratif ci-après :
Dans un réacteur on prépare un mélange de solvants composé « e » et de composé « g » (par exemple alpha-terpinéol, éther(s) de glycol et nitrocellulose); on y ajoute respectivement et dans l'ordre le solvant «X» optionnel (par exemple du cyclooctane et/ou un mélange d'alcanes), le composé « f » (agent modificateur de rhéologie de type urée), et le composé « a » (de préférence sous la forme d'une dispersion de nanoparticules d'argent).

Selon un mode d'exécution particulier de la présente invention, les encres formulées selon la présente invention contiennent une teneur inférieure à 70% en poids de nanoparticules d'argent (composé « a »), de préférence entre 40 et 70%, et plus particulièrement entre 45 et 65 % en poids.

Selon un mode d'exécution de la présente invention, l'encre d'argent comprend
- un composé « a » (nanoparticules d'argent) dans une teneur supérieure à 40 % en poids et inférieure à 65 % en poids,
- un composé « e » (alcool terpénique, polyol et dérivé de polyol) dans une teneur comprise entre 30 et 60 % en poids, de préférence entre 33 et 55 % en poids, par exemple entre 34 et 50 % en poids, et
- un composé « f » (agent modificateur de rhéologie de type urée) et un composé « g » (agent modificateur de rhéologie de type cellulosique) dans une teneur globale inférieure à 20 % en poids, de préférence entre 0,1 et 5 % en poids, par exemple entre 0,4 et 1,5 % en poids,
- un composé « h » (agent antioxydant) optionnel dans une teneur inférieure à 10% en poids, de préférence inférieure à 3% en poids, et
- un composé « X » optionnel dans une teneur inférieure à 30 % en poids, de préférence inférieure à 20 % en poids, par exemple inférieure à 15% en poids, inférieure à 11% en poids, inférieure à 5 % en poids.

Selon un mode d'exécution de la présente invention, l'encre d'argent comprend le composé « h » consistant en un agent antioxydant dans une teneur supérieure à 0,01% en poids.

Selon un mode d'exécution de la présente invention, la teneur en composé « f » dans la formulation d'encre est comprise entre 0,1 et 2 % en poids.

Selon un mode d'exécution de la présente invention, la teneur en composé « g » dans la formulation d'encre est comprise entre 0,1 et 5 % en poids.

Selon un mode d'exécution de la présente invention, l'encre peut également intégrer dans sa composition d'autres composés parmi lesquels nous citerons à titre d'exemple des additifs (par exemple, un additif de la famille des silanes) dont l'objectif est d'améliorer la tenue à différents type de stress mécanique, par exemple l'adhérence sur de nombreux substrats ; on pourra citer à titre d'illustration les substrats suivants polyimide, polycarbonate, polyethertetphtalate PET), polyéthylène naphthalate (PEN), polyaryléthercétone, polyester, polyester thermostabilisé, verre, verre ITO, verre AZO, verre SiN.

Toutefois, les composés « a », « b », « c », « d », « e », « f », « g », « h » et « X » (dans les gammes de proportions indiquées ci-dessus) constitueront de préférence au moins 85% en poids, de préférence au moins 90% en poids, par exemple au moins 95% en poids, au moins 98% en poids, au moins 99% en poids, ou même 100% en poids de l'encre finale.

Selon un mode d'exécution préféré de la présente invention, l'encre comprend une teneur totale en hydrocarbures (par exemple les solvants hydrocarbonés de type cyclooctane et autres alcanes, etc... ) inférieure à 10% en poids.

Selon un mode d'exécution de la présente invention, l'encre n'intègre pas d'eau dans sa composition. Toutefois, comme les composants de l'encre peuvent tolérer des traces d'eau en fonction de leur degré de pureté, il va de soi que la somme de ces traces d'eau correspondantes seront acceptables dans les encres selon la présente invention. Ainsi, la teneur en eau dans l'encre finale dépend en général essentiellement de la teneur en eau des solvants utilisés pour sa préparation ; l'alcool monohydrique (le méthanol de lavage de la dispersion dans notre exemple de réalisation ci-dessus) aura à ce citre l'impact le plus important - par comparaison avec les autres solvants utilisés lors de la préparation de l'encre - sur la teneur finale en eau de l'encre. Selon un mode d'exécution particulier de la présente invention, les encres comprennent des concentrations en eau inférieures à 2 % en poids, de préférence inférieures à 1% en poids, par exemple inférieures à 0,5% en poids, ou même inférieures à 0,2% en poids.

Selon un mode d'exécution préféré de la présente invention, à l'exception des traces d'eau éventuellement présentes dans les composés de formulation/préparation de l'encre, de l'eau n'est pas ajoutée lors de la formulation des encres.

Selon une variante de réalisation de la présente invention, la préparation de la dispersion de nanoparticules selon la présente invention est caractérisée par les étapes suivantes :
a. synthèse des nanoparticules d'argent en présence de l'agent dispersant (composé « c » ) par réduction au moyen d'un agent réducteur d'un précurseur d'argent ;
b. lavage/purification des nanoparticules obtenues à l'étape « a »,
c. addition du composé « b » et du composé « d ».

Selon une variante de réalisation préférée de la présente invention, une phase liquide est toujours présente lors de toutes ces étapes de préparation. En d'autres termes, une caractéristique préférée selon la présente invention consiste en ce que les nanoparticules d'argent ne soient jamais isolées et séchées ; elles restent donc de préférence toujours en contact avec une phase liquide (par exemple un solvant) dans laquelle elles sont dispersées.

Selon une variante de réalisation préférée de la présente invention, lors de l'étape « a », l'addition de l'agent réducteur s'effectue dans tout récipient adapté (par exemple un réacteur) avec la caractéristique qu'elle s'effectue sous-niveau, par exemple à l'aide d'un plongeur directement introduit dans le milieu réactionnel.

Un avantage additionnel de la dispersion selon la présente invention réside dans le fait que sa préparation peut être effectuée à des conditions de pression et/ou de température non contraignantes, par exemple à des conditions de pression et/ou de température proches aux conditions normales ou ambiantes. Il est préférable de rester à moins de 40% des conditions normales ou ambiantes de pression et, en ce qui concerne la température, cette dernière est généralement inférieure à 80°C, de préférence inférieure à 70°C. Par exemple, la Demanderesse a constaté qu'il était préférable de maintenir les conditions de pression durant la préparation de la dispersion à des valeurs oscillant au maximum de 30%, de préférence de 15% autour des valeurs des conditions de pression normales ou ambiantes, de préférence proche de la pression atmosphérique. Un contrôle de ces conditions de pression et/ou de température peut donc être avantageusement inclus dans le dispositif de préparation de la dispersion de manière à remplir ces conditions. Cet avantage lié à une préparation de la dispersion dans des conditions non contraignantes se traduit bien évidemment également par une utilisation facilitée des dites dispersions.

Selon une variante de réalisation de la présente invention, la préparation de l'encre à base de nanoparticules selon la présente invention est caractérisée par les étapes consécutives suivantes :
a. introduction du composé « e » dans un récipient,
b. addition du composé « g »,
c. addition du composé « f »,
d. addition du composé « a » et/ou de la dispersion selon la présente invention.

L'encre ainsi obtenue pourra être utilisée directement ou bien diluée afin d'obtenir les propriétés souhaitées.

Un avantage additionnel de l'encre selon la présente invention réside dans le fait que sa préparation peut être effectuée à des conditions de pression et/ou de température non contraignantes, par exemple à des conditions de pression et/ou de température proches ou identiques aux conditions normales ou ambiantes. Il est préférable de rester à moins de 40% des conditions normales ou ambiantes de pression et/ou de température. Par exemple, la Demanderesse a constaté qu'il était préférable de maintenir les conditions de pression et/ou de température durant la préparation de l'encre à des valeurs oscillant au maximum de 30%, de préférence de 15% autour des valeurs des conditions normales ou ambiantes. Un contrôle de ces conditions de pression et/ou de température peut donc être avantageusement inclus dans le dispositif de préparation de l'encre de manière à remplir ces conditions. Cet avantage lié à une préparation de l'encre dans des conditions non contraignantes se traduit bien évidemment également par une utilisation facilitée des dites encres.

Selon un mode d'exécution de la présente invention, l'encre peut avantageusement être utilisée en sérigraphie.

Il est donc évident pour l'homme de l'art que la présente invention permet des modes de réalisation sous de nombreuses autres formes spécifiques sans pour autant s'éloigner du domaine d'application de l'invention tel que revendiqué. Par conséquent, les présents modes de réalisation doivent être considérés à titre d'illustration mais peuvent être modifiés dans le domaine défini par la portée des revendications jointes.

La présente invention et ses avantages seront à présent illustrés au moyen des formulations reprises dans le tableau ci-dessous. Les formulations d'encres ont été préparées conformément aux modes d'exécution préférés décrits ci-dessus dans la description. Les composés chimiques utilisés sont indiqués dans la deuxième colonne du tableau.

La résistance carrée de l'encre telle que mentionnée dans la présente invention pourra être mesurée selon toute méthode appropriée. A titre d'exemple correspondant aux mesures reprises dans le tableau, elle peut être avantageusement mesurée selon la méthode suivante :
Une encre déposée par spincoater sur un substrat (2000 tour minute / 1 ou 3 min - par exemple du verre), est soumise à un recuit à l'aide d'une plaque chauffante ou d'un four (150°C). Une analyse de la résistance carrée est réalisée dans les conditions suivantes :
Référence de l'appareil : S302 Resistivity Stand
Référence tête 4 pointes : SP4-40045TFY
Référence source de courant : Agilent U8001A
Référence multimètre : Agilent U3400
Température de mesure : température ambiante
Coefficient conversion tension/résistance : 4.5324

La teneur en nanoparticules d'argent telle que mentionnée dans la présente invention pourra être mesurée selon toute mesure appropriée. A titre d'exemple correspondant aux mesures reprises dans le tableau, elle peut être avantageusement mesurée selon la méthode suivante :
Analyse thermogravimétrique
Appareil : TGA Q50 de TA Instrument
Creuset : Alumine
Méthode : rampe
Plage de mesure : de température ambiante à 600°C
Montée en température : 10°C/min

La distribution des tailles des nanoparticules d'argent telle que mentionnée dans la présente invention pourra être mesurée selon toute méthode appropriée. A titre d'exemple, elle peut être avantageusement mesurée selon la méthode suivante : utilisation d'un appareil de type Nanosizer S de Malvern avec les caractéristiques suivantes :
Méthode de mesure DLS (Dynamic light scattering) :
- Type de cuve : verre optique
- Matériel : Ag
- Indice de réfraction des nanoparticules : 0.54
- Absorption : 0.001
- Dispersant : Cyclooctane
- Température : 20 °C
- Viscosité : 2.133
- Indice de réfraction dispersant : 1.458
- General Options : Mark-Houwink parameters
- Analysis Model : General purpose
- Equilibration : 120 s
- Nombre de mesure : 4
D50 est le diamètre pour lequel 50% des nanoparticules d'argent en nombre sont plus petits. Cette valeur est considérée comme représentative de la taille moyenne des grains.

La viscosité de l'encre telle que mentionnée dans la présente invention pourra être mesurée selon toute méthode appropriée. A titre d'exemple, elle peut être avantageusement mesurée selon la méthode suivante :
Appareil : Rhéomètre AR-G2 de TA Instrument
Temps de conditionnement : Pré-cisaillement à 100 s⁻¹ pendant 3 minutes / équilibration pendant 1 minute
Type de test : Paliers de cisaillement
Paliers: 40 s⁻¹, 100 s⁻¹ et 1000 s⁻¹
Durée d'un palier : 5 minutes
Mode : linéaire
Mesure : toutes les 10 secondes
Température : 20°C
Méthode de retraitement de la courbe : Newtonien
Zone retraitée : toute la courbe

Tableau Formulations - sept formulations d'encres conformes à la présente invention sont décrites dans le tableau ci-dessous.

| Composant | Nom | F1 | F2 | F3 | F4 | F5 | F6 | F7 |
|---|---|---|---|---|---|---|---|---|
| "a" | Nanoparticules Ag (50 - 250 nm) | 55.04 | 55.04 | 55.04 | 55.04 | 55.04 | 55.04 | 55.04 |
| "f" | Polyurée - BYK D-410 | 0.70 | 0.50 | 1.00 | 0.50 | 0.30 | 0.30 | 0.30 |
| "e" | Butyl carbitol | 8.96 | 8.96 | 8.96 | 8.96 | 8.96 | 8.96 | 8.96 |
| "g" | Ethyl cellulose 200 | 0.00 | 0.35 | 0.00 | 0.25 | 0.35 | 0.35 | 0.35 |
| "g" | Ethyl cellulose 45 | 0.35 | 0.00 | 0.35 | 0.00 | 0.00 | 0.00 | 0.00 |
| "e" | Alpha-terpineol | 34.95 | 35.15 | 34.65 | 35.25 | 35.35 | 34.35 | 34.35 |
| "h" | Acide citrique | 0.00 | 0.00 | 0.00 | 0.00 | 0.00 | 1.00 | 0.00 |
| "h" | Eugénol | 0.00 | 0.00 | 0.00 | 0.00 | 0.00 | 0.00 | 1.00 |
| | Total | 100.00 | 100.00 | 100.00 | 100.00 | 100.00 | 100.00 | 100.00 |
| | Rcarrée (mΩ/sq) | 80.00 | 51.00 | 184.00 | 66.00 | 61.00 | non mesuré | non mesuré |
| | épaisseur (µm) | 2.73 | 2.60 | 2.40 | 2.21 | 1.27 | non mesuré | non mesuré |
| | Viscosité (cP) | 1324-1042 (40 et 100 s⁻¹) | 1524-1172 (40 et 100 s⁻¹) | 1325-1025 (40 et 100 s⁻¹) | 974-767-411 (40, 100 et 1000 s⁻¹) | 1572-1196-569 (40, 100 et 1000 s⁻¹) | non mesuré | non mesuré |

Le butyl carbitol™ correspond au diéthylène glycol monobutyl éther.

Les encres sont caractérisées par une viscosité améliorée ainsi qu'un comportement à la fois rhéofluidifiant et thixotrope ; cette combinaison inattendue et supérieure de leurs propriétés rend ces encres particulièrement adaptées au domaine de la sérigraphie.

Les compositions d'encre selon une variante de la présente invention sont caractérisées en ce que leur valeur de propriété de résistance carrée est inférieure à 300 mohms/sq pour des épaisseurs supérieures ou égales à 1 µm (température de recuit de 250°C) ; par exemple une valeur de propriété de résistance carrée inférieure à 2 mohms/sq pour des épaisseurs égales à 25 µm (température de recuit de 250°C).

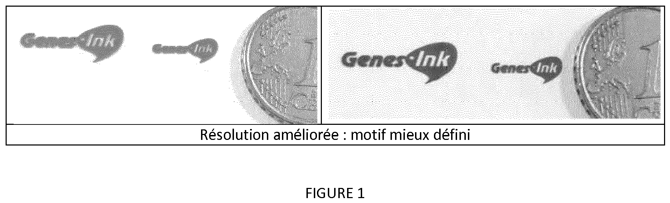

La figure 1 représente un bon exemple de visualisation des avantages apportés par la présente invention ; on observe une amélioration de la résolution entre les formulations F3 (gauche) et F5 (droite) en modifiant la nature et la teneur des additifs de rhéologie.

Les compositions d'encre selon la présente invention peuvent aussi être avantageusement utilisées à une température inférieure à 60°C, de préférence inférieure à 40°C, inférieure à 30°C, par exemple à température ambiante.

La formulation F5 a été testée dans ce sens au moyen de la méthode « Doctor Blade » décrite ci-dessous ce qui a permis de mettre en évidence des mesures de résistance carrée supérieures dont les valeurs après 5h, 24h et 2 mois sont respectivement de 5, 1 et 0,2 Ω/sq.

Ainsi, les compositions d'encre selon une variante de la présente invention sont également caractérisées en ce que leur valeur de propriété de résistance carrée est inférieure à 300 mohms/sq pour des épaisseurs supérieures ou égales à 1 µm (température de séchage à température ambiante), par exemple une valeur de propriété de résistance carrée inférieure à 15 mohms/sq pour des épaisseurs égales à 25 µm (température de séchage à température ambiante).

Cette résistance carrée de l'encre telle que déposée à température ambiante pourra être mesurée selon toute méthode appropriée. A titre d'exemple correspondant aux trois mesures ci-dessus, elle peut être avantageusement mesurée selon la méthode suivante :
Une analyse de la résistance carrée est réalisée dans les conditions suivantes :
Référence de l'appareil : S302 Resistivity Stand
Référence tête 4 pointes : SP4-40045TFY
Référence source de courant : Agilent U8001A
Référence multimètre : Agilent U3400
Température de mesure : température ambiante
Coefficient conversion tension/résistance : 4.5324

Les détails de la méthode « Doctor Blade » ayant été utilisée pour le dépôt de l'encre F5 sont les suivants :
Equipement utilisé : doctor blade de marque Erichsen, modèle 409.
Dépôt de 4 µm (avant séchage) au moyen du Barre coater du Doctor Blade Vitesse de dépôt : 15 mm/s
Substrat utilisé : PET Melinex ST 504
Protocole : Une fois le substrat placé sur le doctor blade, 2 mL d'encre sont déposés sur le substrat devant la barre coater. La barre coater est ensuite déplacée de 15 cm à la vitesse citée précédemment. Le dépôt ainsi obtenu (à température ambiante) est également séché à température ambiante.

La formulation F5 a également été avantageusement testée pour ses propriétés d'adhérence sur substrat qui se sont avérées excellentes. Ce test pourra être effectué selon toute méthode appropriée. A titre d'exemple il a été effectué conformément aux détails qui suivent :
Description scotch test:
Scotch normalisé
Un morceau de scotch (de 5 cm) est placé à l'interface dépôt/substrat.
Le scotch est ensuite enlevé à vitesse constante (2cm/s).

L'appréciation de l'adhérence est faite en analysant les résidus de dépôt qui se sont transférés du substrat vers le scotch. Aucun transfert de matière n'a été observé.

## Revendications

1. Composition d'encre à base de nanoparticules d'argent comprenant
1. un composé « a » consistant en des nanoparticules d'argent,
2. un composé « e » consistant en un mélange de solvants,
3. au moins un composé « f » et/ou « g » sélectionnés parmi
a. un composé « f » consistant en un agent modificateur de rhéologie de type urée, et
b. un composé « g » consistant en un agent modificateur de rhéologie de type cellulosique,
4. un composé « c » optionnel consistant en un agent dispersant,
5. un composé « d » optionnel consistant en un agent dispersant différent du composé « c »,
6. un composé optionnel « b » consistant en un solvant cyclooctane et/ou un solvant de type ester méthylique d'acides gras, et/ou un mélange de deux ou plusieurs des dits solvants, et
7. un composé « h » optionnel consistant en un agent antioxydant dans une teneur inférieure à 10% en poids, et
8. un solvant « X » optionnel additionnel,
**caractérisé en ce que**
A. le composé « a » constitue au moins 40 % en poids de la composition d'encre,
B. le composé « e » consiste en au moins un alcool terpénique qui constitue au moins 20% en poids de la composition d'encre et au moins un polyol et/ou un dérivé de polyol qui constitue au moins 5% en poids et au plus 25% en poids de la composition d'encre, et
C. la somme des composés « a », « b », « c », « d », « e », « f », « g » et « X » constituent au moins 85% en poids de la composition d'encre.

2. Composition d'encre selon l'une quelconque des revendications précédentes **caractérisée en ce que** le mélange de solvants (composé « e ») est **caractérisé par** un rapport pondéral entre l'alcool terpénique et le polyol et/ou le dérivé de polyol qui est compris entre 1,1 et 10, par exemple entre 1,1 et 6.

3. Composition d'encre selon l'une quelconque des revendications précédentes **caractérisée en ce que** le composé « e » est sélectionné parmi les éthers de glycols, par exemple les mono- ou di-éthers de glycols.

4. Composition d'encre selon l'une quelconque des revendications précédentes **caractérisée en ce qu'**elle comprend
• un composé « a » (nanoparticules d'argent) dans une teneur supérieure à 40 % en poids et inférieure à 65 % en poids,
• un composé « e » (alcool terpénique, polyol et dérivé de polyol) dans une teneur comprise entre 30 et 60 % en poids, et
• un composé « f » (agent modificateur de rhéologie de type urée) et un composé « g » (agent modificateur de rhéologie de type cellulosique) dans une teneur globale inférieure à 20 % en poids, de préférence entre 0,1 et 5 % en poids, par exemple entre 0,4 et 1,5 % en poids,
• un composé « h » (agent antioxydant) optionnel dans une teneur inférieure à 10% en poids, de préférence inférieure à 3% en poids, et
• un solvant « X » optionnel dans une teneur inférieure à 30 % en poids, de préférence inférieure à 20 % en poids, par exemple inférieure à 15 % en poids.

5. Composition d'encre selon l'une quelconque des revendications précédentes **caractérisée en ce qu'**elle comprend le composé « f » dans une teneur comprise entre 0,1 et 2 % en poids et le composé « g » dans une teneur comprise entre 0,1 et 5 % en poids.

6. Composition d'encre selon l'une quelconque des revendications précédentes **caractérisée en ce que** l'éther de glycol est sélectionné parmi les éthylène glycol propyl éther, éthylène glycol butyle éther, éthylène glycol phényl éther, propylène glycol phényl éther di éthylène glycol méthyl éther, di éthylène glycol éthyle éther, di éthylène glycol propyl éther, di éthylène glycol butyle éther, propylène glycol méthyle éther, propylène glycol butyle éther, propylène glycol propyl éther, éthylène glycol di-méthyl éther, éthylène glycol di-éthyle éther, éthylène glycol di-butyle éther, glymes, éther di éthylique de di éthylène-glycol, éther di éthylique de di butylène-glycol, diglymes, éthyle diglyme, butyle diglyme, et/ou un mélange de deux ou plusieurs des dits éthers de glycol précités.

7. Composition d'encre selon l'une quelconque des revendications précédentes **caractérisée en ce que** leur valeur de propriété de résistance carrée est inférieure à 300 mohms/sq pour des épaisseurs supérieures ou égales à 1 µm (température de recuit de 250°C).

8. Composition d'encre selon l'une quelconque des revendications précédentes **caractérisée en ce que** leur valeur de propriété de résistance carrée est inférieure à 300 mohms/sq pour des épaisseurs supérieures ou égales à 1 µm (température de séchage à température ambiante).

9. Composition d'encre selon l'une quelconque des revendications précédentes **caractérisée en ce qu'**elle comprend une teneur en eau inférieure à 2 % en poids, de préférence inférieure à 1% en poids, par exemple inférieure à 0,5% en poids, ou même inférieure à 0,2% en poids.

10. Composition d'encre selon l'une quelconque des revendications précédentes **caractérisée en ce que** les nanoparticules d'argent (composé « a ») ont des valeurs de D50 comprises entre 1 et 250 nm.

11. Utilisation d'une encre selon l'une quelconque des revendications précédentes en sérigraphie, blade coating, tampographie et/ou en gravure (offset).

12. Utilisation d'une encre selon l'une quelconque des revendications précédentes à une température inférieure à 60°C, de préférence inférieure à 40°C, inférieure à 30°C, par exemple à température ambiante.

## Patentansprüche

1. Druckfarbenzusammensetzung auf Basis von Silbernanopartikeln, umfassend
1. eine Verbindung "a", die in Silbernanopartikeln besteht,
2. eine Verbindung "e", die in einer Mischung von Lösungsmitteln besteht,
3. mindestens eine Verbindung "f" und/oder "g", die aus den folgenden ausgewählt sind
a. einer Verbindung "f", die in einem Rheologiemodifizierer vom Typ Harnstoff besteht, und
b. einer Verbindung "g", die in einem Rheologiemodifizierer vom celluloseartigen Typ besteht,
4. eine optionale Verbindung "c", die in einem Dispergiermittel besteht,
5. eine optionale Verbindung "d", die in einem Dispergiermittel besteht, welches sich von der Verbindung "c" unterscheidet,
6. eine optionale Verbindung "b", die in einem Cyclooctan-Lösungsmittel und/oder einem Lösungsmittel vom Typ Fettsäuremethylester und/oder einer Mischung aus zwei oder mehr dieser Lösungsmittel besteht, und
7. eine optionale Verbindung "h", die in einem Antioxidans in einem Gehalt von weniger als 10 Gew.-% besteht, und
8. ein zusätzliches optionales Lösungsmittel "X", **dadurch gekennzeichnet, dass**
A.die Verbindung "a" mindestens 40 Gewichts-% der Druckfarbenzusammensetzung ausmacht,
B.die Verbindung "e" in mindestens einem Terpenalkohol, der mindestens 20 Gewichts-% der Druckfarbenzusammensetzung ausmacht, und mindestens einem Polyol und/oder Polyolderivat, das mindestens 5 Gewichts-% und höchstens 25 Gewichts-% der Druckfarbenzusammensetzung ausmacht, besteht und
C.die Summe der Verbindungen "a", "b", "c", "d", "e", "f", "g" und "X" mindestens 85 Gewichts-% der Druckfarbenzusammensetzung ausmacht.

2. Druckfarbenzusammensetzung nach einem beliebigen der vorhergehenden Ansprüche, **dadurch gekennzeichnet, dass** die Mischung von Lösungsmitteln (Verbindung "e") durch ein Gewichtsverhältnis zwischen dem Terpenalkohol und dem Polyol und/oder Polyolderivat zwischen 1,1 und 10, beispielsweise zwischen 1,1 und 6, gekennzeichnet ist.

3. Druckfarbenzusammensetzung nach einem beliebigen der vorhergehenden Ansprüche, **dadurch gekennzeichnet, dass** die Verbindung "e" aus den Glykolethern, beispielsweise den Mono- oder Diethern von Glykolen, ausgewählt ist.

4. Druckfarbenzusammensetzung nach einem beliebigen der vorhergehenden Ansprüche, **dadurch gekennzeichnet, dass** sie Folgendes umfasst:
• eine Verbindung "a" (Silbernanopartikel) zu einem Gehalt von mehr als 40 Gewichts-% und weniger als 65 Gewichts-%,
• eine Verbindung "e" (Terpenalkohol, Polyol und Polyolderivat) zu einem Gehalt zwischen 30 und 60 Gewichts-% und
• eine Verbindung "f" (Rheologiemodifizierer vom Typ Harnstoff) und eine Verbindung "g" (Rheologiemodifizierer vom celluloseartigen Typ) zu einem Gesamtgehalt von weniger als 20 Gewichts-%, vorzugsweise zwischen 0,1 und 5 Gewichts-%, beispielsweise zwischen 0,4 und 1,5 Gewichts-%,
• eine optionale Verbindung "h" (Antioxidans) zu einem Gehalt von weniger als 10 Gewichts-%, vorzugsweise weniger als 3 Gewichts-%, und
• ein optionales Lösungsmittel "X" zu einem Gehalt von weniger als 30 Gewichts-%, vorzugsweise weniger als 20 Gewichts-%, beispielsweise weniger als 15 Gewichts-%.

5. Druckfarbenzusammensetzung nach einem beliebigen der vorhergehenden Ansprüche, **dadurch gekennzeichnet, dass** sie die Verbindung "f" zu einem Gehalt zwischen 0,1 und 2 Gewichts-% und die Verbindung "g" zu einem Gehalt zwischen 0,1 und 5 Gewichts-% umfasst.

6. Druckfarbenzusammensetzung nach einem beliebigen der vorhergehenden Ansprüche, **dadurch gekennzeichnet, dass** der Glykolether aus Ethylenglykolpropylether, Ethylenglykolbutylether, Ethylenglykolphenylether, Propylenglykolphenylether, Diethylenglykolmethylether, Diethylenglykolethylether, Diethylenglykolpropylether, Diethylenglykolbutylether, Propylenglykolmethylether, Propylenglykolbutylether, Propylenglykolpropylether, Ethylenglykoldimethylether, Ethylenglykoldiethylether, Ethylenglykoldibutylether, Glymen, Diethylenglykoldiethylether, Dibutylenglykoldiethylether, Diglymen, Ethyldiglymen, Butyldiglymen und/oder einer Mischung aus zwei oder mehr der oben aufgeführten Glykolether ausgewählt ist.

7. Druckfarbenzusammensetzung nach einem beliebigen der vorhergehenden Ansprüche, **dadurch gekennzeichnet, dass** ihr Eigenschaftswert des Flächenwiderstands weniger als 300 mohm/sq bei Dickewerten von mindestens 1 µm (Wärmebehandlungstemperatur von 250 °C) beträgt.

8. Druckfarbenzusammensetzung nach einem beliebigen der vorhergehenden Ansprüche, **dadurch gekennzeichnet, dass** ihr Eigenschaftswert des Flächenwiderstands weniger als 300 mohm/sq bei Dickewerten von mindestens 1 µm (Trocknungstemperatur bei Umgebungstemperatur) beträgt.

9. Druckfarbenzusammensetzung nach einem beliebigen der vorhergehenden Ansprüche, **dadurch gekennzeichnet, dass** sie einen Wassergehalt von weniger als 2 Gewichts- %, vorzugsweise weniger als 1 Gewichts-%, beispielsweise weniger als 0,5 Gewichts-%, oder sogar von weniger als 0,2 Gewichts-% umfasst.

10. Druckfarbenzusammensetzung nach einem beliebigen der vorhergehenden Ansprüche, **dadurch gekennzeichnet, dass** die Silbernanopartikel (Verbindung "a") D50-Werte zwischen 1 und 250 nm haben.

11. Verwendung einer Druckfarbe nach einem beliebigen der vorhergehenden Ansprüche beim Siebdruck, Blade Coating, Tampondruck und/oder Tiefdruck (Offsetdruck).

12. Verwendung einer Druckfarbe nach einem der vorhergehenden Ansprüche bei einer Temperatur von weniger als 60 °C, vorzugsweise weniger als 40 °C, weniger als 30 °C, beispielsweise bei Umgebungstemperatur.

## Claims

1. Ink composition based on silver nanoparticles comprising:
1. a compound "a" consisting of silver nanoparticles,
2. a compound "e" consisting of a mixture of solvents,
3. at least one compound "f" and/or "g" selected from
a. a compound "f" consisting of a rheology modifier of urea type, and
b. a compound "g" consisting of a rheology modifier of cellulose type,
4. an optional compound "c" consisting of a dispersant,
5. an optional compound "d" consisting of a dispersant different from compound "c",
6. an optional compound "b" consisting of a cyclooctane solvent and/or a solvent of fatty acid methyl ester type, and/or a mixture of two or more of said solvents, and
7. an optional compound "h" consisting of an antioxidant in a content of less than 10% by weight, and
8. an additional optional solvent "X",
**characterized in that**:
A. the compound "a" constitutes at least 40% by weight of the ink composition,
B. the compound "e" consists of at least one terpene alcohol which constitutes at least 20% by weight of the ink composition and at least one polyol and/or one polyol derivative which constitutes at least 5% by weight and at most 25% by weight of the ink composition, and
C. the sum of the compounds "a", "b", "c", "d", "e", "f", "g" and "X" constitute at least 85% by weight of the ink composition.

2. Ink composition according to any one of the preceding claims, **characterized in that** the mixture of solvents (compound "e") is **characterized by** a weight ratio between the terpene alcohol and the polyol and/or the polyol derivative which is between 1.1 and 10, for example between 1.1 and 6.

3. Ink composition according to either one of the preceding claims, **characterized in that** the compound "e" is selected from glycol ethers, for example glycol mono- or diethers.

4. Ink composition according to any one of the preceding claims, **characterized in that** it comprises:
• a compound "a" (silver nanoparticles) in a content of greater than 40% by weight and less than 65% by weight,
• a compound "e" (terpene alcohol, polyol and polyol derivative) in a content of between 30 and 60% by weight, and
• a compound "f" (rheology modifier of urea type) and a compound "g" (rheology modifier of cellulose type) in an overall content of less than 20% by weight, preferably between 0.1 and 5% by weight, for example between 0.4 and 1.5% by weight,
• an optional compound "h" (antioxidant) in a content of less than 10% by weight, preferably less than 3% by weight, and
• an optional solvent "X" in a content of less than 30% by weight, preferably less than 20% by weight, for example less than 15% by weight.

5. Ink composition according to any one of the preceding claims, **characterized in that** it comprises the compound "f" in a content of between 0.1 and 2% by weight and the compound "g" in a content of between 0.1 and 5% by weight.

6. Ink composition according to any one of the preceding claims, **characterized in that** the glycol ether is selected from ethylene glycol propyl ether, ethylene glycol butyl ether, ethylene glycol phenyl ether, propylene glycol phenyl ether, diethylene glycol methyl ether, diethylene glycol ethyl ether, diethylene glycol propyl ether, diethylene glycol butyl ether, propylene glycol methyl ether, propylene glycol butyl ether, propylene glycol propyl ether, ethylene glycol dimethyl ether, ethylene glycol diethyl ether, ethylene glycol dibutyl ether, glymes, diethylene glycol diethyl ether, dibutylene glycol diethyl ether, diglymes, ethyl diglyme, butyl diglyme, and/or a mixture of two or more of said above-mentioned glycol ethers.

7. Ink composition according to any one of the preceding claims, **characterized in that** their sheet resistance property value is less than 300 mohm/sq for thicknesses of greater than or equal to 1 µm (annealing temperature of 250°C).

8. Ink composition according to any one of the preceding claims, **characterized in that** their sheet resistance property value is less than 300 mohm/sq for thicknesses of greater than or equal to 1 µm (drying temperature at ambient temperature).

9. Ink composition according to any one of the preceding claims, **characterized in that** it comprises a water content of less than 2% by weight, preferably less than 1% by weight, for example less than 0.5% by weight, or even less than 0.2% by weight.

10. Ink composition according to any one of the preceding claims, **characterized in that** the silver nanoparticles (compound "a") have D50 values of between 1 and 250 nm.

11. Use of an ink according to any one of the preceding claims in screen printing, blade coating, pad printing and/or gravure (offset) printing.

12. Use of an ink according to any one of the preceding claims at a temperature of less than 60°C, preferably less than 40°C, less than 30°C, for example at ambient temperature.
